(19) Europäisches Patentamt
European Patent Office
Office européen des brevets

(11) **EP 3 283 538 B1**

(12) **EUROPÄISCHE PATENTSCHRIFT**

(45) Veröffentlichungstag und Bekanntmachung des Hinweises auf die Patenterteilung:
**19.06.2019 Patentblatt 2019/25**

(21) Anmeldenummer: **16719248.3**

(22) Anmeldetag: **11.04.2016**

(51) Int Cl.:
**C08F 236/12** (2006.01)      **C08C 1/14** (2006.01)
**C08C 2/00** (2006.01)

(86) Internationale Anmeldenummer:
**PCT/EP2016/057934**

(87) Internationale Veröffentlichungsnummer:
**WO 2016/166063 (20.10.2016 Gazette 2016/42)**

(54) **EMISSIONSARME, NITRILKAUTSCHUKE ENTHALTENDE PULVERFÖRMIGE MISCHUNGEN**

POWDER FORM MIXTURES CONTAINING LOW-EMISSION NITRILE RUBBERS

MÉLANGES POUDREUX CONTENANT DU CAOUTCHOUC DE NITRILE À FAIBLE ÉMISSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.04.2015 EP 15290101**

(43) Veröffentlichungstag der Anmeldung:
**21.02.2018 Patentblatt 2018/08**

(73) Patentinhaber: **ARLANXEO Deutschland GmbH 41540 Dormagen (DE)**

(72) Erfinder:
• **KAISER, Andreas**
  **40468 Düsseldorf (DE)**
• **BRANDAU, Sven**
  **67000 Strasbourg (FR)**
• **STÄBER, Robert**
  **35085 Ebsdorfergrund (DE)**

(56) Entgegenhaltungen:
EP-A1- 2 368 916      EP-A1- 2 368 917
EP-A1- 2 535 389      DE-A1-102007 024 009
GB-A- 1 523 850

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft emissionsarme pulverförmige Mischungen enthaltend mindestens einen speziellen Nitrilkautschuk und ein oder mehrere Trennmittel, deren Herstellung sowie deren Verwendung zur Herstellung von Composites enthaltend zusätzlich mindestens einen Thermoplasten und darauf basierende Materialien, insbesondere Bauteile für Innenraumanwendungen.

Pulverförmige Nitrilkautschuke finden Einsatz in mannigfaltigen Anwendungen. Sie werden z.B. in der Modifizierung von Phenolharzen bei der Herstellung von Bremsbauteilen, -belägen oder - scheiben benutzt. Des Weiteren werden sie zur Modifizierung von Thermoplasten eingesetzt, inbesondere zur Modifizierung von Polyvinylchlorid (PVC) wegen der exzellenten Verträglichkeit mit diesem weit verbreiteten Kunststoff. Derartig elastifizierte PVCs werden z.B. zur Herstellung von Profilen, Kabelummantelungen oder Dichtungen verwendet. Diverse dieser Bauteile werden im Automobilsektor eingesetzt. Entsprechend finden sich potentielle Anwendungen dieser Bauteile auch im Fahrzeuginnenraum, insbesondere in Innenräumen von Kraftfahrzeugen, oder, sofern nicht im Automobilsektor, z. B. in Gebäudeinnenräumen. Im Hinblick darauf kommt der Bereitstellung pulverförmiger Kautschuke mit niedrigen Emissionswerten zunehmende Bedeutung zu, da in den letzten Jahren verstärkt neue Normen und Regularien zur Reduzierung von Emissionen aufgestellt wurden. Die Reduzierung und Begrenzung von Emissionen aus Kunststoffbauteilen sowie aus Kautschuken und somit auch von elastifizierten Thermoplasten stellt daher eine besondere Anforderung dar.

Grundsätzlich sind zur Herstellung von Elastomeren in Pulverform eine Reihe von Kautschuken denkbar, wie NBR, EPDM oder SBR. Insbesondere dann jedoch, wenn eine Modifizierung von PVC, Polyurethanen oder Polyamiden gewünscht ist (z.B. zur Erhöhung der Schlagzähigkeit), sind wegen der ausgezeichneten Kompatibilität Nitrilkautschuke besonders geeignet. Der Einsatz von Kautschukpulvern ermöglicht hierbei eine bessere Dosierung zu sowie Dispergierung im Thermoplasten und somit ein homogeneres Eigenschaftsprofil.

Die amerikanische **Indoor airPLUS** Liste empfiehlt insbesondere für Innenraumanwendungen den Gebrauch von niedrig Emissionsmaterialien.

**ISO 12219-1:2012** beschreibt den Testablauf und die Bestimmung von VOCs (volatile organic compounds) im Innenraum von Automobilen. Drei verschiedene Tests werden in dieser ISO Norm beschrieben, wobei zwei sich auf die Bestimmung der flüchtigen VOCs im Autoinnenraum bezieht. und eine auf die Bestimmung von Formaldehyd.

Ein Beispiel für die Verwendung emissionsarmer polymerer Materialien findet sich in CN 102757597**,** worin besonders geruchsarmes Polypropylen (PP) beschrieben wird, das mit elastomeren Materialien modifiziert wird. Das beschriebene Material zeichnet sich durch einen geringen Geruch sowie gute mechanische Eigenschaften aus. Der geringe Geruch wird durch Zusatz eines Deodorants, also eines geruchsabsorbierenden Mittels erreicht. Besonders geeignet sollen diese Materialien für den Einsatz in Fahrzeuginnenräumen sein. Eine besondere Form der Aufarbeitung oder der Form, in der die verwendeten Polymere eingesetzt werden wird nicht erwähnt.

In der Anmeldung CN 1730544 wird die Herstellung eines Bauteils unter Verwendung eines ABS-Harzes beschrieben, das sich durch reduzierten Geruch auszeichnet. Dabei wird neben dem Terpolymer bei der Compoundierung eine "geruchsunterdrückende" Substanz eingemischt. Bei der Substanz handelt es sich um ein Alkalimetall-Aluminiumsilikatpulver bzw. eine Kombination dessen mit Kieselgel. Die für den Geruch verantwortlichen Substanzen sind also nach wie vor im Polymer vorhanden und werden lediglich mittels der geruchsabsorbierenden Materialien gebunden. Eine besondere Form der Aufarbeitung oder der Form, in der die verwendeten Polymere eingesetzt werden wird nicht erwähnt.

In CN 102617940 wird die Mischungsherstellung unterschiedlicher Elastomere, unter anderem NBR, mit typischen Zuschlagsstoffen beschrieben. Das erhaltene Gummi zeichnet sich durch gute Isolationseigenschaften aus und soll für die Verwendung im Automobilbereich geeignet sein. Es wird kein Hinweis auf ein Verfahren zur Reduktion irgendwie gearteter Emissionen gegeben.

Die Verwendung von Mercaptanen als Molekulargewichtsregler bei der Polymerisation zur Herstellung von Co-oder Terpolymeren wird in JP 50023713 beschrieben. Diese Terpolymere enthalten unter anderem Acrylnitril und Butadien als Monomerbausteine. Nach der Durchführung der Polymerisation wird der Latex mit Peroxid oder Peroxiessigsäure behandelt und so eine Geruchsreduktion des Polymers erreicht. Nachteilig an diesem Verfahren ist, dass das im Latex enthaltene Polymer gegebenenfalls mit dem Peroxid oder der Peroxiessigsäure reagiert und es zur Bildung unerwünschter Begleitprodukte oder einer Vorvernetzung kommt.

In einer noch nicht veröffentlichten europäischen Patentanmeldung der Anmelderin wird die Bereitstellung von Nitrilkautschuken mit einem sehr guten Vulkanisationsverhalten und einem gleichzeitig verbesserten Emissionsverhalten beschrieben, wobei die korrespondierenden Vulkanisate über exzellente Eigenschaften verfügen. Charakterisiert werden diese Nitrilkautschuke mit Wiederholungseinheiten mindestens eines $\alpha,\beta$-ungesättigten Nitril-Monomeren und mindestens eines konjugierten Dien-Monomeren durch einen **Emissionsquotienten E** gemäß der Formel (I) von kleiner oder gleich 0,25 mg/(kg*Mooney Einheiten),

$$E = \frac{[\text{flüchtige Bestandteile}]}{[\text{Mooney Viskosität}]} \times \frac{[\text{Nitrilgehalt}]}{100} \qquad (I)$$

worin

| | |
|---|---|
| [flüchtige Bestandteile] | die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden, |
| [Mooney-Viskosität] | die nach ASTM D 1646 bestimmte Mooney-Viskosität ML 1+4 bei 100°C des Nitrilkautschuks angegeben in Mooney-Einheiten darstellt, und |
| [Nitrilgehalt] | den dimensionslos angegebenen Gehalt des $\alpha,\beta$-ungesättigten Nitrils im Nitrilkautschuk darstellt, der in Gew.% gemäß DIN 53 625 nach Kjeldahl bestimmt wird. |

Erhältlich sind diese Nitrilkautschuke, wenn die Emulsionspolymerisation unter Wahl spezieller Molekulargewichtsregler durchgeführt und gleichzeitig die Polymerisation bis zu einem Umsatz von 60% oder höher geführt wird. Beschrieben werden ferner vulkanisierbare Mischungen auf Basis des emissionsarmen Nitrilkautschuks und deren generelle Eignung für Riemen, Walzenbeläge, Dichtungen, Kappen, Stopfen, Schläuche, Bodenbeläge, Dichtungsmatten oder - platten, Profile oder Membranen. Ob und in welcher räumlichen Form die emissionsarmen Kautschuke anfallen und zur Herstellung der entsprechenden Formteile eingesetzt werden, wird keine Beachtung geschenkt. Die für die dort genannten Anwendungen typische Einsatzform ist die des Kautschukballens und der Kautschukkrümel. Auf die Eigenschaften pulverförmiger NBR wird nicht eingegangen.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitril, mindestens einem konjugierten Dien und gegebenenfalls einem oder mehreren weiteren copolymerisierbaren Monomeren handelt. Derartige Nitrilkautschuke und Verfahren zur Herstellung solcher Nitrilkautschuke sind bekannt, siehe z.B. Ullmann's Encyclopedia of Industrial Chemistry, VCH Verlagsgesellschaft, Weinheim, 1993, S. 255-261.

NBR wird typischerweise durch Emulsionspolymerisation hergestellt, wobei zunächst ein NBR-Latex erhalten wird. Der NBR-Feststoff wird aus diesem Latex durch Koagulation isoliert, meist unter Einsatz von Salzen oder Säuren. Die so erhaltenen Festkautschuke können durch Mahlung in pulverförmige Elastomere überführt werden. Bei einer alternativen Aufarbeitung wird das NBR-Pulver direkt aus dem Latex durch Sprühtrocknung gewonnen. Die Emulsionspolymerisation muss dabei üblicherweise unter Einsatz von Molekulargewichtsreglern durchgeführt werden, um Polymere mit guten Verarbeitungseigenschaften zu erhalten. Häufig eingesetzte Molekulargewichtsregler basieren auf Mercaptanen. Zur Molekulargewichtsregelung von Emulsionskautschuken auf der Basis von Monomeren wie Styrol, Butadien, Acrylnitril, (Meth)acrylsäure, Fumarsäure, Ethylacrylat, Butylacrylat, 2-Ethylhexylacrylat, Chloropren und anderen ist insbesondere die Verwendung von Dodecylmercaptanen von Bedeutung.

In US-A-2,434,536 wird beschrieben, dass synthetische Kautschuke auf Basis von Diolefinen wie z.B. Butadien und gegebenenfalls weiteren copolymerisierbaren Monomeren wie z.B. Styrol, $\alpha$-Methylstyrol, Vinylnaphthalin, Acrylnitril, Methacrylnitril, Methylmethacrylat, Ethylfumarat oder Methylvinylketon durch Emulsionspolymerisation in Gegenwart von aliphatischen Mercaptanen als Molekulargewichtsreglern hergestellt werden. Offenbart wird, dass diese Mercaptane mindestens 7 und bevorzugt 10 oder mehr Kohlenstoff-Atome aufweisen. Bevorzugt werden aliphatische Mercaptane mit einem mittleren Molekulargewicht von 188 bis 230 eingesetzt, welche mindestens 50% Dodecylmercaptan und den restlichen Anteil zu 100% in Form von Mercaptanen mit 10 bis 16 Kohlenstoffatomen aufweisen.

In EP-A-0 692 496, EP-A-0 779 301 und EP-A-0 779 300 werden jeweils Nitrilkautschuke auf Basis eines ungesättigten Nitrils und eines konjugierten Diens beschrieben, denen gemeinsam ist, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist. Die Herstellung der Nitrilkautschuke erfolgt jeweils in Gegenwart eines entsprechend aufgebauten $C_{12}$-$C_{16}$-Alkylthiols als Molekulargewichtsregler, der als "Chain transfer agent" fungiert und somit als Endgruppe in die Polymerketten eingebaut wird. Maßnahmen, durch die eine Beeinflussung der VOC Werte des Nitrilkautschuks oder Nitrilkautschuk enthaltender Pulver sowie des Eigenschaftsprofils von darauf basierenden Composites oder Formteilen möglich sind, können der Lehre dieses Patents nicht entnommen werden.

In Ullmanns Enzyklopädie der technischen Chemie, 4. Auflage, Band 13, S. 611-612 wird allgemein beschrieben, dass das Molekulargewicht von Nitril-Butadien-Kautschuken durch den Einsatz von Alkylmercaptanen, Di- und Polysulfiden oder Xanthogendisulfiden geregelt werden kann. tert-Dodecylmercaptan sowie Diisopropylxanthogendisulfide werden als hauptsächlich eingesetzte Regler genannt. Auch in der industriellen Praxis werden häufig tertiäre Docdecylmercaptane eingesetzt (auch als "TDM" oder "TDDM" abgekürzt). Bekannt ist beispielsweise das von Chevron Philipps käuflich erhältliche TDM, welches in der Regel aus einer großen Mischung verschiedenster Isomere besteht. Eigene Untersuchungen ergaben, dass Nitrilkautschuke, die unter Einsatz tertiärer Dodecylmercaptane hergestellt werden, in VOC Tests (durchgeführt mittels TDS-GC/MS Untersuchungen nach VDA 278 Empfehlung) einen hohen Anteil an Schwefelverbindungen und ferner nicht-Schwefel haltigen Verunreinigungen des TDMs aufweisen, die in einigen praktischen Anwendungen, insbesondere in Innenräumen, zu wahrnehmbaren und unangenehmen Geruchsbelästigungen führen können.

Während es über den Einfluss der unterschiedlichen zur Latexkoagulation einsetzbaren Salze auf die Eigenschaften des erhaltenen Nitrilkautschuks umfangreiche Literatur gibt, finden sich keinerlei Hinweise oder Untersuchungen zum Einfluss der Molekulargewichtsregler auf die VOC-Werte von Nitrilkautschuken. Für spezielle Anwendungen in Innenräumen, z. B. im Baubereich oder im Fahrzeuginnenraum auf Basis von Nitrilkautschuken kommt jedoch den VOC-Werten erhebliche Bedeutung zu. Dies trifft sowohl auf die Verwendung von NBR als Festkautschuk als auch auf die Verwendung von NBR in Pulverform zu.

Zusammenfassend ist festzustellen, dass bis heute noch keine Massnahmen bekannt geworden sind, wie man unter dem Einsatz von Mercaptanen als Molekulargewichtsreglern Nitrilkautschuke und diese enthaltende pulverförmige Mischungen mit einem deutlich verringerten VOC-Gehalt erhalten kann, die zur Herstellung von solchen Bauteilen in Innenräumen genutzt werden können, für die der Einsatz von pulverförmigen Mischungen vorteilhaft ist.

Generell sind die Ansprüche der Industrie an Kautschuke mit niedrigen Emissionswerten gestiegen, insbesondere für Anwendungen in Innenräumen wie z.B. Fahrgastzellen von Automobilen. Bei der Herstellung von Nitrilkautschuk basierten Pulvertypen durch Mahlung oder Sprühtrocknung bereits eine Reduktion der flüchtigen Komponenten erzielt werden können, enthalten die Ausgangskautschuke noch relativ hohe Anteile flüchtiger Bestandteile. Diese werden bei der Herstellung der Pulver in die Produktionsumgebung abgegeben und steigern somit die Belastung für Mensch und Umwelt in Produktionsnähe. Um diese Belastung zu minimieren, sollen die Bestandteile der Polymerisationsrezeptur so gewählt werden, dass hierdurch bereits eine Reduktion der VOC-Werte ermöglicht wird.

**Aufgabe der vorliegenden Erfindung** ist es, Nitrilkautschuke enthaltende pulverförmige Mischungen bereitzustellen, die zur Herstellung von Bauteilen geeignet sind, die in Innenräumen zur Anwendung kommen können und die deutlich niedrigere Emissionen zeigen als bisher bekannte Nitrilkautschuk Pulver.

**Gegenstand der vorliegenden Erfindung** ist somit eine **pulverförmige Mischung** enthaltend

(1) mindestens einen **Nitrilkautschuk,** der Wiederholungseinheiten mindestens eines $\alpha,\beta$-ungesättigten Nitril-Monomeren und mindestens eines konjugierten Dien-Monomeren aufweist und einen **Emissionsquotienten E** gemäß der Formel (I) von kleiner oder gleich 0,25 mg/(kg*Mooney Einheiten) besitzt,

$$E = \frac{[\text{flüchtige Bestandteile}]}{[\text{Mooney Viskosität}]} \times \frac{[\text{Nitrilgehalt}]}{100} \qquad (I)$$

worin

| | |
|---|---|
| [flüchtige Bestandteile] | die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden, |
| [Mooney-Viskosität] | die nach ASTM D 1646 bestimmte Mooney-Viskosität ML 1+4 bei 100°C des Nitrilkautschuks angegeben in Mooney-Einheiten darstellt, und |
| [Nitrilgehalt] | den dimensionslos angegebenen Gehalt des $\alpha,\beta$-ungesättigten Nitrils im Nitrilkautschuk darstellt, der in Gew.% gemäß DIN 53 625 nach Kjeldahl bestimmt wird, |

und

(2) ein oder mehrere **Trennmittel,**

dadurch gekennzeichnet, dass die pulverförmige Mischung aus (1) und (2) einen mittleren Partikeldurchmesser $D_a$ im Bereich von 0,01 bis 4 mm aufweist.

**Gegenstand der Erfindung** ist ferner die **Herstellung** der erfindungsgemäßen emissionsarmen pulverförmigen Mischungen sowie deren **Verwendung** zur Herstellung von Compositen, die zusätzlich mindestens einen Thermoplasten enthalten, diese Composite und darauf basierende Bauteile.

**Mittlerer Partikeldurchmesser der pulverförmige Mischungen:**

Der **mittlere Partikeldurchmesser $D_a$** der pulverförmigen Mischung wird granulometrisch bestimmt, indem man 100 g der pulverförmigen Mischung in einem Sieb mit der Maschengrösse 2.0 mm einwiegt, unterhalb dieses ersten Siebes weitere Siebe mit der Maschengrösse 1,4; 1,0; 0,8; 0,6 und 0,3 mm platziert, die zusammengesetzten Siebe auf einer Vibrationssiebmaschine (z.B. AS 200 control 'g' , Fa. Retsch) einspannt und mit einer Amplitude von 2,00 mm für einen Zeitraum von 30 min bewegt, anschließend den Inhalt jedes Siebs auswiegt und den mittleren Partikeldurchmesser $D_a$ gemäss der Formel (1) berechnet

$$D_a = \sum(X_i D_i)/100 \qquad\qquad (1)$$

worin

$D_a$    den mittleren Partikeldurchmesser in mm bedeutet
$X_i$    den Gew.%-Anteil der im jeweiligen Sieb zurückgehaltenen Masse der pulverförmigen Mischung in g bedeutet
$D_i$    die mittlere Maschenweite des jeweiligen Siebes n und n+1 in mm bedeutet, die sich aus der folgenden Formel (2) ergibt

$$D_i = (D_n + D_{(n+1)})/2 \qquad\qquad (2)$$

worin

$D_n$      der Maschendurchmesser des Siebes n in mm ist, und
$D_{(n+1)}$    der Maschendurchmesser des Siebes n+1 in mm ist.

Der mittlere Partikeldurchmesser der erfindungsgemäßen pulverförmigen Mischungen lässt sich innerhalb der o.g. Grenzen von 0,01 bis 4 mm in gewissem Maß durch die Art der Herstellung, wie sie nachfolgend beschrieben wird, beeinflussen:
In einer Ausführungsform weisen die pulverförmige Mischungen einen mittleren Partikeldurchmesser $D_a$ im Bereich von 0,01 bis 4 mm, bevorzugt im Bereich von 0,05 bis 3 mm, besonders bevorzugt im Bereich von 0,1 mm bis 2 mm und insbesondere bevorzugt im Bereich von 0,2 mm bis 1,5 mm auf. Diese pulverförmige Mischungen sind beispielsweise erhältlich, wenn Nitrilkautschuke (1) eingesetzt werden, die durch **Mahlung** erhältlich sind.
In einer weiteren Ausführungsform weisen die pulverförmige Mischungen einen mittleren Partikeldurchmesser $D_a$ im Bereich von 0,01 bis 2 mm, bevorzugt im Bereich von 0,04 mm bis 1 mm, besonders bevorzugt im Bereich von 0,06 bis 0,75mm und insbesondere bevorzugt im Bereich von 0,08 mm bis 0,12 mm auf. Diese pulverförmige Mischungen sind beispielsweise erhältlich, wenn Nitrilkautschuke (1) eingesetzt werden, die durch **Sprühtrocknung** erhältlich sind.
Für beide Ausführungsformen wird die Durchführung im Folgenden im Rahmen der Herstellung der pulverförmigen Mischungen beschrieben.

**Nitrilkautschuk:**

Der in den erfindungsgemäßen pulverförmigen Mischungen enthaltene Nitrilkautschuk besitzt einen Emissionsquotienten E gemäß der allgemeinen Formel (I) von kleiner oder gleich 0,25 mg/(kg*Mooney Einheiten), bevorzugt kleiner oder gleich 0,22 mg/(kg*Mooney Einheiten) und besonders bevorzugt kleiner oder gleich 0,20 mg/(kg*Mooney Einheiten).
Bei den flüchtigen Bestandteilen, deren Konzentration durch die TDS-GC/MS Untersuchung nach VDA 278 Empfehlung (Version 09.2002) zwischen 28,4 min und 34,0 min bestimmt werden zwecks Berechnung des Emissionskoeffizienten, handelt es sich typischerweise um flüchtige Bestandteile des eingesetzten Molekulargewichtsreglers.
Die Bestimmung der Mooney Viskosität des Nitrilkautschuks (ML 1+4 bei 100°C) gemäß nach ASTM D 1646 erfolgt typischerweise unter Einsatz von nicht kalandrierten erfindungsgemäßen Nitrilkautschuken.
Die erfindungsgemäß einzusetzenden Nitrilkautschuke weisen Wiederholungseinheiten mindestens eines $\alpha,\beta$-ungesättigten Nitrils und mindestens eines konjugierten Diens auf. Optional können sie ferner Wiederholungseinheiten von einem oder mehreren weiteren copolymerisierbaren Monomeren enthalten Wesentlich ist, dass der Emissionsquotienten E gemäß der allgemeinen Formel (I) von kleiner oder gleich 0.25 mg/(kg Mu) erfüllt ist.
Die Wiederholungseinheiten im Nitrilkautschuk, die auf dem mindestens einen **konjugierten Dien** basieren, gehen bevorzugt auf ($C_4$-$C_6$) konjugierte Diene zurück. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als α,β-**ungesättigtes Nitril** kann jedes bekannte α,β-ungesättigte Nitril zur Herstellung der erfindungsgemäßen Nitrilkautschuke eingesetzt werden, bevorzugt sind ($C_3$-$C_5$)-α,β-ungesättigte Nitrile wie Acrylnitril, Methacrylnitril, Ethacrylnitril oder Mischungen davon. Besonders bevorzugt ist Acrylnitril.

In einer Ausführungsform der Erfindung enthält die pulverförmige Mischung einen Nitrilkautschuk enthaltend Wiederholungseinheiten von Acrylnitril und Butadien, besonders bevorzugt mit Wiederholungseinheiten von ausschließlich Acrylnitril und Butadien.

Als weitere copolymerisierbare Monomere können beispielsweise **aromatische Vinylmonomere,** bevorzugt Styrol, α-Methylstyrol und Vinylpyridin, eingesetzt werden sowie **nicht-konjugierte Diene,** wie 4-Cyanocyclohexen und 4-Vinylcyclohexen, oder auch **Alkine,** wie 1- oder 2-Butin.

Weiterhin können als copolymerisierbare Termonomere Epoxygruppenhaltige Monomere eingesetzt werden, vorzugsweise Glycidylacrylat und Glycidylmethacrylat.

Alternativ können als weitere copolymerisierbare Monomere **carboxygruppenhaltige, copolymerisierbare Termonomere** eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Als α,β-**ungesättigte Monocarbonsäuren** können bevorzugt Acrylsäure und Methacrylsäure eingesetzt werden.

Einsetzbar sind auch **Ester der** α,β-**ungesättigten Monocarbonsäuren,** bevorzugt deren Alkylester und Alkoxyalkylester. Bevorzugt sind die Alkylester, insbesondere $C_1$-$C_{18}$ Alkylester der α,β-ungesättigten Monocarbonsäuren, Besonders bevorzugt sind Alkylester, insbesondere $C_1$-$C_{18}$ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere $C_2$-$C_{12}$-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einsetzbar sind auch Aminogruppenhaltige α,β-ungesättigte Carbonsäureester wie Dimethylaminomethylacrylat und Diethylaminoethylacrylat.

Als weitere copolymerisierbare Monomere können ferner α,β-**ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner α,β-**ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von** α,β-**ungesättigten Dicarbonsäuren.**

Bei diesen α,β-**ungesättigten Dicarbonsäuremono- oder diestern** kann es sich z.B. um **Alkyl-,** bevorzugt $C_1$-$C_{10}$-Alkyl, insbesondere Ethyl-, n-Propyl-, iso-Propyl, n-Butyl, tert.-Butyl, n-Pentyl- oder n-Hexyl-, **Alkoxyalkyl-,** bevorzugt $C_2$-$C_{12}$ Alkoxyalkyl-, besonders bevorzugt $C_3$-$C_8$-Alkoxyalkyl, **Hydroxyalkyl,** bevorzugt $C_1$-$C_{12}$ Hydroxyalkyl-, besonders bevorzugt $C_2$-$C_8$-Hydroxyalkyl, **Cycloalkyl-,** bevorzugt $C_5$-$C_{12}$-Cycloalkyl-, besonders bevorzugt $C_6$-$C_{12}$-Cycloalkyl, **Alkylcycloalkyl-,** bevorzugt $C_6$-$C_{12}$-Alkylcycloalkyl-, besonders bevorzugt $C_7$-$C_{10}$-Alkylcycloalkyl, **Aryl-,** bevorzugt $C_6$-$C_{14}$-Aryl-Mono- oder -Diester, handeln, wobei es sich im Fall der Diester jeweils auch um gemischte Ester handeln kann.

Besonders bevorzugte **Alkylester von** α,β-**ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der** α,β-**ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der α,β-ungesättigten Monocarbonsäuren werden ferner beispielsweise Polyethylenglykol(meth)acrylat, Polypropylenglykol(meth)acrylat, N-(2-Hydroxyethyl)acrylamide, N-(2-Hydroxymethyl)acrylamide und Urethan(meth)acrylat eingesetzt.

Als α,β-**ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als **weitere copolymerisierbare Monomere** kommen ferner radikalisch polymerisierbare Verbindungen in Betracht, die pro Molekül mindestens zwei olefinische Doppelbindungen enthalten. Derartige Monomere führen entsprechend zu einer gewissen Vorvernetzung des Nitrilkautschuks. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder -methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamidopropoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat. In einer Ausführungs-form der Erfindung werden Ethylenglykoldiacrylat oder Trimethylolpropandi(meth)acrylat als derartiges copolymerisierbares Monomer eingesetzt, bevorzugt neben Acrylnitril und Butadien als weiteren Monomeren. Hier hat es sich bewährt dieses copolymerisierbare Monomer mit einer Menge von bis zu 10 Gew.%, bevorzugt bis zu 7 Gew.%, bezogen auf die gesamte Monomermenge einzusetzen.

Die Anteile an konjugiertem Dien und $\alpha,\beta$-ungesättigtem Nitril in den einzusetzenden Nitrilkautschuken können in weiten Bereichen variieren. Der Anteil des oder der Summe der konjugierten Diene liegt üblicherweise im Bereich von 20 bis 95 Gew.%, bevorzugt im Bereich von 45 bis 90 Gew.-%, besonders bevorzugt im Bereich von 50 bis 85 Gew. %, bezogen auf das Gesamtpolymer. Der Anteil des oder der Summe der $\alpha,\beta$-ungesättigten Nitrile liegt üblicherweise bei 5 bis 80 Gew.%, bevorzugt bei 10 bis 55 Gew.-%, besonders bevorzugt bei 15 bis 50 Gew.-%, bezogen auf das Gesamtpolymer. Die Anteile der Wiederholungseinheiten an konjugiertem Dien und $\alpha,\beta$-ungesättigtem Nitril in den erfindungsgemäßen Nitrilkautschuken summieren sich jeweils zu 100 Gew.-% auf.

Die zusätzlichen Monomere können in Mengen von 0 bis 40 Gew.%, bevorzugt 0 bis 30 Gew.-%, besonders bevorzugt 0 bis 26 Gew.-%, bezogen auf das Gesamtpolymer, vorliegen. In diesem Fall werden entsprechende Anteile der Wiederholungseinheiten des oder der konjugierten Diene und/oder der Wiederholungseinheiten des oder der $\alpha,\beta$-ungesättigten Nitrile durch die Anteile dieser zusätzlichen Monomere ersetzt, wobei sich die Anteile aller Wiederholungseinheiten der Monomere weiterhin jeweils zu 100 Gew.-% aufsummieren.

Die Bestimmung des Nitrilgehalts erfolgt über den Stickstoffgehalt, der in den Nitrilkautschuken gemäß DIN 53 625 nach Kjeldahl bestimmt wird.

Die Nitrilkautschuke weisen Mooney-Viskositäten ML 1+4 @100°C von 10 bis 150 Mooney Einheiten (MU), vorzugsweise von 20 bis 100 MU auf. Die Mooney-Viskosität ML 1+4@100°C wird mittels eines Scherscheibenviskosimeters nach DIN 53523/3 bzw. ASTM D 1646 bei 100°C bestimmt. Typischerweise erfolgt diese Messung unter Einsatz von nicht kalandrierten Nitrilkautschuk Proben.

Die Glastemperaturen der Nitrilkautschuke liegen im Bereich -70°C bis +10°C, vorzugsweise im Bereich -60°C bis 0°C.

Bevorzugt sind Nitrilkautschuke, die Wiederholungseinheiten von Acrylnitril, und 1,3-Butadien enthalten, besonders bevorzugt solche, die ausschließlich Wiederholungseinheiten von Acrylnitril und 1,3-Butadien aufweisen.

Bevorzugt sind weiterhin Nitrilkautschuke, die Wiederholungseinheiten von Acrylnitril, 1,3-Butadien und einem oder mehreren weiteren copolymerisierbaren Monomeren aufweisen. Besonders bevorzugt sind Nitrilkautschuke, die Wiederholungseinheiten von Acrylnitril, 1,3-Butadien und

- einer oder mehreren $\alpha,\beta$-ungesättigten Mono- oder Dicarbonsäure, deren Estern oder Amiden aufweisen, und insbesondere Wiederholungseinheiten eines Alkylesters einer $\alpha,\beta$-ungesättigten Carbonsäure, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat oder
- einer oder mehreren mehrfach ungesättigten Verbindungen aufweisen, und insbesondere Wiederholungseinheiten von Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder - methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen, Methylen-bisacrylamid, Hexamethylen-1,6-bisacrylamid, Diethylentriamin-tris-methacrylamid, Bis(methacrylamidopropoxy)ethan, 2-Acrylamido-ethylacrylat, Divinylbenzol, Ethylenglykol-divinylether, Diallylphthalat, Allylmethacrylat, Diallylmaleat, Triallylisocyanurat oder Triallylphosphat.

Der erfindungsgemäß einzusetzende Nitrilkautschuk weist ferner eingebaute Fragmente des eingesetzten Molekulargewichtsreglers auf. Bei den flüchtigen Bestandteilen, deren Konzentration durch die TDS-GC/MS Untersuchung nach VDA 278 Empfehlung (Version 09.2002) zwischen 28,4 min und 34,0 min bestimmt werden zwecks Berechnung des Emissionskoeffizienten, handelt es sich um flüchtige Bestandteile des eingesetzten Molekulargewichtsreglers.

**Trennmittel:**

Die pulverförmigen Mischungen enthalten neben dem oben beschriebenen Nitrilkautschuk ein oder mehrere **Trennmittel.** Als Trennmittel geeignet sind jedwede Materialien, die das Verklumpen der pulverförmigen Nitrilkautschuke über den gewünschten Lagerzeitraum gewährleisten. Typischerweise sind die Trennmittel ebenfalls pulverförmig

Bevorzugt werden die Trennmittel ausgewählt aus Kieselsäuren, insbesondere solchen mit einer spezifischen Oberfläche nach BET von mehr als 5 m$^2$/g, die auch chemisch modifiziert, besonders bevorzugt hydrophobisiert, sein können, Calciumcarbonat, Magnesiumcarbonat, Silikaten, besonders bevorzugt Talk, Glimmer, Bentonite oder Montmorillonite, Fettsäuresalzen, besonders bevorzugt Alkali- und Erdalkalimetallsalze von Fettsäuren mit mehr als 10 Kohlenstoffatomen, ganz besonders bevorzugt Calcium- oder Magnesiumsalze derartiger Fettsäuren, insbesondere Calciumstearat, Magnesiumstearat und Aluminiumzinkstearat, Calciumphosphat, Aluminiumoxid, Bariumsulfat, Zinkoxid, Titandioxid, Polymeren mit hoher Glastemperatur, beispielsweise von mehr als 60 °C, besonders bevorzugt Polyester, Polyolefine, Polyvinylchlorid und Stärke, hydrophilen Polymeren, besonders bevorzugt Polyvinylalkohol, Polyalkylenoxidverbindungen, insbesondere Polyethylenoxidverbindungen wie Polyethylenglykole oder Polyethylenglykolether, Polyacrylsäure, Polyvinylpyrrolidon und Zellulosederivaten, Fluorkohlenwasserstoffpolymeren, Carbonanotubes und Mischungen der genannten Trennmittel. Besonders bevorzugt werden Trennmittel ausgewählt aus der Gruppe Kieselsäure, Calciumcarbonat, Silikat, PVC und Fettsäuresalze eingesetzt.

Das eine oder die mehreren Trennmittel sind in der erfindungsgemäßen pulverförmigen Mischung in Summe in einer Menge im Bereich von typischerweise 0,25 bis 45 Gew.%, bevorzugt 1-45 Gew.%, bevorzugt 2 - 25 Gew.% und besonders bevorzugt 4 - 15 Gew.% bezogen auf die gesamte Mischung enthalten.

In einer alternativen Ausführungsform werden das eine oder die mehreren Trennmittel in der erfindungsgemäßen pulverförmigen Mischung in Summe in einer Menge im Bereich von 5 bis 10 Gew.% eingesetzt, bezogen auf die gesamte Mischung.

**Verfahren zur Herstellung der erfindungsgemäßen pulverförmigen Mischungen:**

Die Herstellung der einzusetzenden Nitrilkautschuke erfolgt durch Emulsionspolymerisation. Das Verfahren wird in Anwesenheit von tert.-Nonylmercaptan als Molekulargewichtsregler durchgeführt wird. Hierbei kann es sich beispielsweise

a) um tert.-Nonylmercaptan mit einer Reinheit von mindestens 95 Gew.%, bevorzugt mindestens 97 Gew.% handeln, oder

b) um ein Gemisch, das mindestens 50 Gew.% aber weniger als 95 Gew.% tert.-Nonylmercaptan enthält sowie ein oder mehrere weitere isomere Nonylmercaptane und/oder ein oder mehrere weitere C$_{10}$-C$_{16}$ Alkylthiole enthält.

Das tert.-Nonylmercaptan a) ist käuflich erhältlich, z.B. von Sigma Aldrich (CAS Nr. 25360-10-5) mit einer Reinheit von mindestens 97 Gew.% oder von Chevron Phillips als Produkt Sulfol® 90 mit einer Reinheit von mindestens 97 Gew.% oder von diversen Chemikalienherstellern.

Gemische b), die mindestens 50 Gew.% aber weniger als 95 Gew.% tert.-Nonylmercaptan enthalten sowie ein oder mehrere weitere isomere Nonylmercaptane und/oder ein oder mehrere weitere C$_{12}$-C$_{16}$ Alkylthiole, sind ebenfalls käuflich erhältlich, z.B. als Mercaptane 175 von Atofina mit einem Gehalt an tert.-Nonylmercaptan von 65 Gew.% und Dodecylmercaptanen von 35 Gew.% oder Sulfol® 100 von Chevron Phillips.

Der eingesetzte Molekulargewichtsregler wird bei der Polymerisation üblicherweise in einer Menge von 0,05 bis 3 Gew.-Teilen, vorzugsweise von 0,1 bis 1,5 Gew.-Teilen bezogen auf 100 Gew.-Teile der Monomermischung verwendet. Geeignete Mengen kann der Fachmann in einfachen Handversuchen ermitteln.

Die Dosierung des Molekulargewichtsreglers bzw. des Molekulargewichtsreglergemischs erfolgt entweder ausschließlich zu Beginn der Polymerisation oder zu Beginn und zusätzlich portionsweise im Verlauf der Polymerisation. Bei Batch-Verfahren wird die gesamte Menge des Molekulargewichtsreglers bzw. des Molekulargewichtsreglergemischs typischerweise am Anfang zugegeben, bei kontinuierlicher Durchführung hat sich eine inkrementelle Zugabe bewährt. Üblicherweise wird der Molekulargewichtsregler bzw. das Reglergemisch dann in mindestens zwei Stufen zugegeben, wobei die Zugabe in zwei, drei oder auch mehr Stufen möglich ist. Selbst eine kontinuierliche Zugabe über die gesamte Polymerisationszeit ist möglich. Besonders bevorzugt wird der Molekulargewichtsregler bzw. das Molekulargewichtsreglergemisch in zwei Stufen zugegeben. Bei einer Zweistufendosierung hat es sich bewährt, den Regler/das Reglergemisch zunächst in einer Menge von 5 bis 65 Gew%, bevorzugt 10 bis 60 Gew.%, bezogen auf die Gesamtmenge an Regler/Reglergemisch, vor Beginn der Polymerisation zuzugeben und die restliche Menge an Regler/Reglergemisch in einer nachfolgenden Dosierung bei einem Umsatz von 5 bis 80%, bevorzugt 10 bis 55%, bezogen auf die insgesamt eingesetzte Menge an Monomeren. Bei einer Dreifach- und Mehrfach-Dosierung empfiehlt es sich, durch geeignete Vorversuche die günstigste Menge an Molekulargewichtsregler und den günstigsten Zeitpunkt der Zugabe duzu ermitteln.

Der Molekulargewichtsregler findet sich aufgrund seiner Funktion in einem gewissen Maß in Form von Endgruppen im Nitrilkautschuk wieder, d.h. der Nitrilkautschuk enthält $C_9$-Alkylthio-Endgruppen. In einer Ausführungsform enthält der erfindungsgemäße textile Bodenbelag in der rückseitigen Trägerschicht somit ein Vulkanisat basierend auf mindestens einem Nitrilkautschuk (1), enthaltend $C_9$-Alkylthio-Endgruppen und mit einem **Emissionsquotienten E** gemäß der Formel (I) von kleiner oder gleich 0,25 mg/(kg*Mooney Einheiten), bevorzugt kleiner oder gleich 0,22 mg/(kg*Mooney Einheiten) und besonders bevorzugt kleiner oder gleich 0,20 mg/(kg*Mooney Einheiten). In einer speziellen Variante dieser Ausführungsform basiert das Vulkanisat auf mindestens einem Nitrilkautschuk mit Wiederholungseinheiten ausschließlich von Acrylnitril und Butadien.

Pulverförmige Mischungen basierend auf Nitrilkautschuken, deren Polymerisation nicht unter Einsatz des speziellen Molekulargewichtsreglers und nicht bis zu Umsätzen von mindestens 60% bezogen auf die Summe der eingesetzten Monomeren geführt wird, zeigen ein deutlich schlechteres Emissionsverhalten. Bauteile auf Basis von Vulkanisaten, die unter Einsatz der erfindungsgemäßen pulverförmigen Mischungen hergestellt werden, zeigen bei den relevanten Anwendungen, keinerlei Geruchsbelästigungen mehr. Die auf den speziellen Nitrilkautschuken basierenden Mischungen zeichnen sich gleichzeitig durch ein exzellentes Vulkanisationsverhalten aus.

**Emulgatoren:**

Als **Emulgatoren** können wasserlösliche Salze anionischer Emulgatoren oder auch neutrale Emulgatoren eingesetzt werden. Bevorzugt werden anionische Emulgatoren eingesetzt.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia of Industrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium-Natrium, Kalium und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methylenverbrückte Aromaten infrage, wobei die methylenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligomerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laursylsulfat, Na-Alkylsulfonatgemische mit 12 bis 18 C-Atomen, Na-Alkylarylsulfonate, Na-Diisobutylennaphthalinsulfonat, methylenverbückte Polynaphthalinsulfonatgemische sowie methylenverbrückte Arylsulfonatgemische.

Neutrale Emulgatoren leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsufonat sowie alkylierte und methylenverbrückte Naphthalinsulfonsäuren.

Die Emulgatoren werden in einer Gesamtmenge von 0,2-15 Gew.Teile, bevorzugt 0,5-12,5 Gew.Teile, besonders bevorzugt 1,0-10 Gew.Teile bezogen auf 100 Gew.Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbskoagulation neigen, können die genannten Emulgatoren auch zur Nachstabilisierung der Latices verwendet werden. Dies kann insbesondere vor der Entfernung nicht umgesetzter Monomerer durch Behandlung mit Wasserdampf sowie vor einer Latexlagerung notwendig werden.

## Polymerisationsinitiatoren:

Zur Initiierung der Emulsionspolymerisation werden typischerweise **Polymerisationsinitiatoren** eingesetzt, die in Radikale zerfallen. Hierzu gehören Verbindungen, die eine -O-O- Einheit (Peroxo-Verbindungen) oder eine -N=N- Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriumphosphat oder Tetrakaliumdiphsophat.

Bevorzugte Redoxsysteme sind beispielsweise:

1) Kaliumperoxodisulfat in Kombination mit Triethanolamin,
2) Ammoniumperoxodiphosphat in Kombination mit Natrimmetabisulfit ($Na_2S_2O_5$),
3) p-Menthanhydroperoxid / Natriumformaldehydsulfoxylat in Kombination mit Fe-II-Sulfat ($FeSO_4$*7 $H_2O$), Natrium-Ethylendiaminoacetat und Trinatriumphosphat;
4) Cumolhydroperoxid/Natriumformaldehydsulfoxylat in Kombination mit Fe-II-Sulfat ($FeSO_4$*7 $H_2O$), Natrium-Ethylendiaminoacetat und Tetrakaliumdiphosphat,
5) Pinanhydroperoxid/Natriumformaldehydsulfoxylat in Kombination mit Fe-II-Sulfat ($FeSO_4$*7 $H_2O$), Natrium-Ethylendiaminoacetat und Trinatriumphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die **Polymerisationszeit** liegt im Bereich von 1 h bis 25 h, bevorzugt 2 bis 25 h, und hängt im Wesentlichen vom Acrylnitrilgehalt der Monomermischung und von der Polymerisationstemperatur ab.

Die **Polymerisationstemperatur** liegt im Bereich von 0 bis 30°C, bevorzugt von 5 bis 25°C.

Es ist wesentlich für den Erhalt der erfindungsgemäßen Nitrilkautschuke, dass die Polymerisation bis zu einem **Umsatz von mindestens 60% bezogen auf die eingesetzte Monomermischung** durchgeführt wird. Bevorzugt wird die Polymerisation bis zu einem Umsatz im Bereich von 60 bis 100%, besonders bevorzugt 62 bis 100%, insbesondere 65 bis 100% durchgeführt. Bei Erreichen dieses Umsatzes wird die Polymerisation abgestoppt.

Hierfür wird dem Reaktionsgemisch ein **Stopper** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Die bei der Emulsionspolymerisation verwendete **Wassermenge** liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Zur Reduktion der Viskosität während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Meist startet man die Polymerisation mit 10-80 Gew.%, vorzugsweise 30-50 Gew.% der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegen soll. Vorzugsweise ist eine Nachdosierung bei NBR-Typen mit Acrylnitrilgehalten von 10 bis 34 Gew.% sowie bei den Typen mit 40 bis 50 Gew.% Acrylnitril (W. Hofmann, "Nitrilkautschuk", Berliner Union, Stuttgart, 1965, Seite 58-66) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere kann der abgestoppte Latex einer Wasserdampfdestillation unterzogen werden. Hierbei werden Temperaturen im Bereich von 70°C bis 150°C angewandt, wobei bei Temperaturen <100°C der Druck reduziert wird. Vor der Wasserdampfdestillation kann eine Nachstabilisierung des Latex mit Emulgator erfolgen. Hierfür verwendet man zweckmäßigerweise die zuvor genannten Emulgatoren in Mengen von 0,1 bis 2,5 Gew.%, vorzugsweise 0,5 bis 2,0 Gew.% bezogen auf 100 Gew.-Teile Nitrilkautschuk.

**Herstellung der erfindungsgemäßen den Nitrilkautschuk enthaltenden pulverförmigen Mischungen:**

Die Herstellung der Nitrilkautschuk enthaltenden pulverförmigen Mischungen kann auf verschiedenen Wegen erfolgen und umfasst jeweils, dass der spezielle, wie vorstehend definierte Nitrilkautschuk (1) mit dem ein oder den mehreren Trennmitteln (2) in Kontakt gebracht wird. Typischerweise umfasst die Herstellung der Nitrilkautschuk-Komponente (1) entweder einen Mahlschritt (Weg 1) oder aber einen Sprühtrocknungsschritt (Weg 2), im Rahmen deren jeweils das Inkontaktbringen mit dem/den Trennmitteln erfolgt.

**Weg 1:**

Wie vorstehend beschrieben fallen Nitrilkautschuke nach der Emulsionspolymerisation und Aufarbeitung letztendlich in Form von Kautschukkrümeln an, die häufig zu Kautschukballen verpresst werden. Zur Herstellung der erfindungsgemäßen pulverförmigen Mischungen werden die Kautschukballen oder -krümel durch mechanische Behandlung, sprich eine Mahlung und/oder Mikronisierung, die optional in mehreren Stufen erfolgen kann, auf die gewünschte Teilchengrösse zerkleinert. Um ein Verkleben der elastomeren Teilchen zu verhindern, wird im Herstellprozess mindestens ein Trennmittel eindosiert. Die so erhaltenen pulverförmigen Mischungen auf Basis von Nitrilkautschuk und Trennmittel sind in ihren Polymereigenschaften und betreffend ihre Teilchengrößenverteilung mehrere Monate lagerstabil.

**Weg 1** umfasst im Anschluss an die Emulsionspolymerisation somit eine Koagulation des Latex, die anschließende Wäsche und Trocknung des koagulierten Nitrilkautschuks unter Isolierung von Kautschukkrümeln, optional die Verpressung zu Kautschukballen und abschließend die Zerkleinerung und Mahlung der Kautschukballen oder -krümel durch mechanische Behandlung, die optional in mehreren Stufen erfolgen kann. Es ist z.B. möglich in einem ersten Schritt eine Grobmahlung vorzunehmen und im zweiten Schritt eine Feinmahlung, auch Mikronisierung genannt. Die Zugabe des Trennmittels erfolgt typischerweise während des Mahlvorgangs und kann in einer Portion oder aber in verschiedenen Portionen inkrementiert erfolgen.

**Latex-Koagulation:**

Vor oder bei der Latexkoagulation können dem Latex ein oder mehrere **Alterungsschutzmittel** zugesetzt werden. Hiefür eigenen sich phenolische, aminische und auch sonstige Alterungsschutzmittel.

Geeignete **phenolische Alterungsschutzmittel** sind alkylierte Phenole, styrolisiertes Phenol (CAS-Nr. 61788-44-1), sterisch gehinderte Phenole wie 2,6-Di-tert.-Butylphenol, 2,6-Di-tert-Butyl-p-Kresol (Vulkanox BHT, CAS-Nr.000128-37-0), 2,6-Di-tert.-Butyl-4-Ethylphenol, 2,2'-Methylen-bis(6-tert.butyl)-p-kresol (Vulkanox BKF, CAS-Nr. 000119-47-1), Poly(dicyclopentadien-co-p-kresol), estergruppen-haltige sterisch gehinderte Phenole wie n-Octadecyl-(beta)-(4-hydroxy-3,5-di-tert-butyl-phenyl)-propionat, thioetherhaltige sterisch gehinderte Phenole, 2,2'-Methylen-bis-(4-Methyl-6-tert-Butylphenol) (BPH), 2-Methyl-4,6-bis(octylsulfanylmethyl)phenol sowie sterisch gehinderte Thiobisphenole. In weiteren Ausführungsformen werden auch zwei oder mehr Alterungsschutzmittel zugesetzt, wie z.B. eine Mischung aus n-Octadecyl-β-(4-hydroxy-3,5-di-tert butyl-phenyl)propionat, Poly(dicyclopentadien-co-p-kresol) und 2-Methyl-4,6-bis(octylsulfanylmethyl)phenol.

Falls eine Verfärbung des Kautschuks ohne Bedeutung ist, werden auch **aminische Alterungsschutzmittel** z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), bevorzugt solche auf Phenylendiaminbasis eingesetzt. Beispiele für Phenylendiamine sind *N*-Isopropyl-*N'*-phenyl-*p*-Phenylendiamin, N-1,3-Dimethylbutyl-*N'*-Phenyl-*p*-Phenylendiamin (6PPD), *N*-1,4-Dimethylpentyl-*N'*-phenyl-*p*-Phenylendiamin (7PPD), *N,N'*-bis-1,4-(1,4-Dimethylpentyl)-*p*-Phenylendiamin (77PD) etc.

Zu den **sonstigen Alterungsschutzmitteln** gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die vorgenannten sonstigen Alterungsschutzmittel werden oft in Kombination mit phenolischen Altrungsschutzmitteln eingesetzt. Die sonstigen Alterungsschutzmittel TMQ, MBI und MMBI werden v.a. für NBR-Typen verwendet, die peroxidisch vulkanisiert werden.

Für die Koagulation wird der Latex auf einen für den Fachmann bekannten pH-Wert und zwar durch Zusatz einer Base, bevorzugt Ammoniak oder Natrium- oder Kaliumhydroxid, oder einer Säure, bevorzugt Schwefelsäure oder Essigsäure, eingestellt.

In einer Ausführungsform des Verfahrens wird die Koagulation unter Einsatz mindestens eines Salzes ausgewählt aus der Gruppe bestehend aus Aluminium-, Calcium-, Magnesium-, Natrium-, Kalium- und Lithium-Salzen durchgeführt. Als Anionen dieser Salze werden üblicherweise ein- oder zweiwertige Anionen eingesetzt. Bevorzugt sind Halogenide, besonders bevorzugt Chlorid, Nitrat, Sulfat, Hydrogencarbonat, Carbonat, Formiat und Acetat.

Geeignet sind beispielsweise Natriumchlorid, Kaliumchlorid, Calciumchlorid, Magnesiumchlorid, Natriumnitrat, Kaliumnitrat, Natriumsulfat, Kaliumsulfat, Natriumhydrogencarbonat, Kaliumhydrogencarbonat, Natriumcarbonat, Kaliumcarbonat, Aluminiumsulfat, Kaliumaluminiumsulfat (Kaliumalaun), Natriumaluminiumsulfat (Natriumalaun), Natriumacetat, Calciumacetat und Calciumformiat. Sofern für die Latex Koagulation ein wasserlösliches Calcium-Salz verwendet wird, ist Calciumchlorid bevorzugt.

Die Salze werden in einer Menge von 0,05 bis 10 Gew.%, bevorzugt 0,5 bis 8 Gew.%, besonders bevorzugt 1 bis 5 Gew.%, bezogen auf den Feststoffgehalt der Latexdispersion zugegeben

Neben mindestens einem Salz aus der oben definierten Gruppe können bei der Koagulation auch Fällhilfsmittel eingesetzt werden. Als Fällhilfsmittel kommen beispielsweise wasserlöslichen Polymere in Frage. Diese sind nichtionisch, anionisch oder kationisch.

Beispiele für nichtionische polymere Fällhilfsmittel sind modifizierte Cellulose wie Hydroxyalkylcellulose oder Methylcellulose sowie Addukte von Ethylenoxid und Propylenoxid an Verbindungen mit acidem Wasserstoff. Beispiele für Verbindungen mit acidem Wasserstoff sind: Fettsäure, Zucker wie Sorbit, Mono- und Difettsäureglyceride, Phenol, alkylierte Phenole, (Alkyl)-phenol/Formaldehyd-Kondensate etc. Die Additionsprodukte von Ethylenoxid und Propylenoxid an diese Verbindungen können statistisch und blockartig aufgebaut sein. Von diesen Produkten sind solche bevorzugt, bei denen die Löslichkeit mit zunehmender Temperatur abnimmt.

Beispiele für anionische polymere Fällhilfsmittel sind die Homo- und Copolymeren von (Meth)acrylsäure, Maleinsäure, Maleinsäureanydrid etc. Bevorzugt ist das Na-Salz der Polyacrylsäure.

Kationische polymere Fällhilfsmittel basieren üblicherweise auf Polyaminen sowie auf Homo- und Copolymeren des (Meth)acrylamids. Bevorzugt sind Polymethacxrylamide und Polyamine, insbesondere auf Basis Epichlorhydrin und Dimethylamin. Die Mengen an polymeren Fällhilfsmitteln betragen 0,01 bis 5 Gew.Teilen, bevorzugt 0,05 bis 2,5 Gew.Teile auf 100 Gew.-Teile Nitrilkautschuk.

Auch der Einsatz anderer Fällhilfsmittel ist denkbar. Es ist aber ohne Probleme möglich, das erfindungsgemäße Verfahren in Abwesenheit von zusätzlichen Fällhilfsmitteln durchzuführen.

Der zur Koagulation eingesetzte Latex besitzt zweckmäßigerweise eine Feststoffkonzentration im Bereich von 1 - 40 Gew.%, vorzugsweise im Bereich von 5- 35 Gew.% und besonders bevorzugt im Bereich von 15 - 30 Gew. %.

Die Latexkoagulation wird im Temperaturbereich von 10 bis 110°C durchgeführt, vorzugsweise von 20 bis 100°C, besonders bevorzugt 50 bis 98°C. Die Latexkoagulation kann kontinuierlich oder diskontinuierlich erfolgen, bevorzugt wird kontinuierlich gearbeitet.

In einer alternativen Ausführungsform kann der üblicherweise von nicht umgesetzten Monomeren abgetrennte Latex auch mit Säuren in einem pH-Bereich von ≤ 6, bevorzugt ≤ 4, besonders bevorzugt 2, behandelt werden, wodurch das Polymer ausfällt. Zur Fällung können alle mineralischen und organischen Säuren verwendet werden, die es gestatten die gewählten pH-Bereiche einzustellen. Mineralische Säuren werden bevorzugt zur pH-Einstellung verwendet. Anschließend wird das Polymer in der dem Fachmann üblichen Weise von der Suspension abgetrennt. Auch dies kann kontinuierlich oder diskontinuierlich erfolgen, bevorzugt wird kontinuierlich gearbeitet.

**Wäsche und Trocknung des koagulierten Nitrilkautschuks:**

Nach der Koagulation liegt der Nitrilkautschuk üblicherweise in Form sogenannter Krümel vor. Die Wäsche des koagulierten NBR wird daher auch als Krümelwäsche bezeichnet. Für diese Wäsche kann entweder entionisiertes Wasser oder nicht entionisiertes Wasser eingesetzt werden. Die Wäsche wird bei einer Temperatur im Bereich von 15 bis 90°C durchgeführt, bevorzugt bei einer Temperatur im Bereich von 20 bis 80°C. Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk. Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist. Nach Abschluss der Wäsche hat es sich bewährt, die Nitrilkautschuk-Krümel zu entwässern. Die Trocknung des vorentwässerten Nitrilkautschuks erfolgt in einem Trockner, geeignet sind beispielsweise Fließbetttrockner oder Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

Für die Zerkleinerung und Mahlung empfehlen sich dem Fachmann bekannte Apparaturen und Mahlwerke.

**Weg 2:**

In dem zweiten möglichen Verfahren geht man direkt von dem bei der Emulsionspolymerisation anfallenden Polymerlatex aus, bei dem es sich um eine typischerweise durch Emulgatoren stabilisierte Suspension fester Polymerteilchen in Wasser handelt. Aus diesem Latex wird das pulverförmige Elastomer unmittelbar gewonnen, indem das Wasser aus dem Latex mittels einer Sprühtrocknung vom Polymer abgetrennt wird und das Polymer dabei in Form eines feinen Pulvers anfällt. Das oder die Trennmittel werden dabei wie unten beschrieben eindosiert.

Die Sprühtrocknung der Latices aus der Emulsionspolymerisation erfolgt im Allgemeinen in üblichen Sprühtürmen. Dabei wird der bevorzugt auf 15 bis 100 °C erwärmte Latex über Pumpen in den Sprühturm befördert und über beispielsweise im Kopf des Turms befindliche Düsen bevorzugt bei Drücken von 50 bis 500 bar, vorzugsweise 100 bis 300 bar versprüht. In einer Ausführungsform herrscht im Sprühturm ein Unterdruck im Berich von 100 bis 500 mbar, bevorzugt 150 bis 400 mbar. Heißluft mit einer Eintrittstemperatur von bevorzugt 100 bis 350 °C wird beispielsweise im Gegenstrom zugeführt und verdampft das Wasser. Das Pulver sinkt nach unten und das trockene Pulver wird am Fuß des Turmes ausgeschleust. Das oder die Trennmittel und optional weitere Additive wie zum Beispiel Alterungsschutzmittel, Antioxidantien, optische Aufheller etc. werden bevorzugt als trockene Pulver ebenfalls am Kopf des Turmes eingeblasen. Sie können auch teilweise oder vollständig dem Latex vor der Sprühtrocknung zugemischt werden. Die dem Sprühturm zugeführten Latices weisen bevorzugt Feststoffkonzentrationen von 10 - 60 Gew.%, besonders bevorzugt 20-50 Gew.% und insbesondere 30-50 Gew.% bezogen auf den Latex auf.

Durch beide Wege kann aufgrund des eingesetzten speziellen emissionsarmen NBRs in Kombination mit dem Trennmittel eine stabile Pulverform erhalten werden, die einen deutlich verringerten VOC Gehalt aufweist. Wichtig ist, dass diese Reduktion des VOC Gehalts bereits während der Herstellung der Mischung erzielt wird, so dass bei der anschließenden Verarbeitung zu Composites wie nachfolgend beschrieben keine gesundheitlich bedenkliche Exposition mehr gegeben ist. Erfreulicherweise gelingt die Reduktion des VOC Gehalts erfindungsgemäß, ohne dass das Polymer einer größeren zeitlichen und thermischen Belastung ausgesetzt werden muss, was sich in den Verfahren des Standes der Technik teilweise negativ auf die Polymerstruktur, auf das Alterungsverhalten, die Elastizität oder die Farbstabilität der Produkte auswirkt oder auswirken kann.

**Gegenstand der Erfindung** sind ferner **Composites** enthaltend

(A) mindestens eine erfindungsgemäße pulverförmige Mischung enthaltend mindestens einen wie vorstehend speziell definierten Nitrilkautschuk (1) und ein oder mehrere Trennmmittel (2), die den wie vorstehend definierten mittleren Partikeldurchmesser $D_a$ im Bereich von 0,01 bis 4 mm aufweist, und

(B) ein oder mehrere thermoplastische Polymere.

In einer bevorzugten Ausführungsform ist die Komponente (B) ausgewählt aus der Gruppe bestehend aus Polyvinylchlorid, Polyurethanen, Polyamiden, Epoxidharzen, Phenolharzen, Polypropylen, Polyethylen, Polyethylenvinylacetat und Polystyrol.

In einer besonders bevorzugten Ausführungsform ist die Komponente (B) ausgewählt aus der Gruppe bestehend aus Polyvinylchlorid, Polyurethanen und Polyamiden.

Es hat sich bewährt, die Komponenten (A) (Nitrilkautschuk) und (B) (Thermoplast) in einem Gewichtsverhältnis von (1-99): (99-1), bevorzugt (10-60): (90-40) einzusetzen.

Diese Composites zeichnen sich durch eine hervorragende und homogene Dispersion der pulverförmigen Mischungen im Thermoplasten aus und führen daher zu den gewünschten Eigenschaftsverbesserungen wie z.B. einer ausgezeichneten Schlagzähigkeit.

**Gegenstand der Erfindung** ist ferner ein **Verfahren zur Herstellung der vorstehend definierten Composites,** indem man die beiden Komponenten (A) und (B) miteinander mischt.

Das Mischen der Komponenten erfolgt typischerweise entweder im Innenmischer, auf einer Walze oder aber mittels eines Extruders. Als Innenmischer werden üblicherweise solche mit sogenannter "ineinandergreifender" Rotorgeometrie verwendet. Zum Startzeitpunkt erfolgt die Beschickung des Innenmischers, der Walze oder des Extruders mit der erfindungsgemäßen pulverförmigen Mischung und/oder dem ein oder mehreren Thermoplasten. Das Mischen erfolgt unter Kontrolle der Temperatur mit der Maßgabe, dass das Mischgut für eine geeignete Zeit bei einer solchen Temperatur verbleibt, die ein Aufschmelzen der Thermoplast Komponente (B) bewirkt. Üblicherweise werden Temperaturen im Bereich von 100 bis 280°C gewählt. Soweit noch weitere Additive zugegeben werden sollen, werden diese zu geeigneten Zeitpunkten zugegeben. Nach einem weiteren geeigneten Mischzeitraum wird der Innenmischer gelüftet und unter Erhalt des Composites entleert. Alle vorgenannten Zeiträume bewegen sich üblicherweise im Bereich einiger Minuten und können vom Fachmann problemlos in Abhängigkeit von der herzustellenden Mischung festgelegt werden. Werden Walzen als Mischaggregat verwendet, kann in analoger Weise und Reihenfolge bei der Zudosierung vorgegangen werden. Alternativ sinnvolle Zugabe-Reihenfolgen sind möglich und erschließen sich dem Fachmann durch einige wenige Mischversuche.

In alternativen Ausführungsformen kann es sinnvoll sein, bei der Herstellung der Composites zusätzlich noch weitere Komponenten zuzugeben.

Für die gesamte weiteren Ausführungen steht "phr", ohne dass dies jedes Mal erwähnt wird, für "parts per hundred of rubber" und bezieht sich somit auf 100 Gew.-Teile aller Kautschuke, die zur Herstellung des Composites eingesetzt werden. Sofern das Composite als Kautschuk ausschließlich die Nitrilkautschuk Komponente (1) enthält, beziehen sich die phr Angaben für die weiteren Komponenten somit auf 100 Gew.Teile des Nitrilkautschuks.

Optional werden bei der Herstellung der Composites ein oder mehrere **Vernetzer** eingesetzt. Hierbei kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimethylolpropantrimethacrylat, Zn-diacrylat, Zn-dimethacrylat, 1,2-Polybutadien oder N,N-'m-phenylendimaleinimid geeignet.

Soweit sie eingesetzt werden, liegt die Gesamtmenge des oder der Vernetzer üblicherweise im Bereich von 0,05 bis 20 phr, bevorzugt im Bereich von 0,1 bis 10 phr, besonders bevorzugt im Bereich von 0,2 bis 8 phr und insbesondere bevorzugt im Bereich von 0,2 bis 5 phr.

Als Vernetzer können auch Schwefel in elementarer löslicher oder unlöslicher Form oder Schwefelspender eingesetzt werden.

Wird Schwefel als Vernetzer eingesetzt, so wird er üblicherweise in einer Menge von 0,1 bis 10, bevorzugt 0,2 bis 5 phr und besonders bevorzugt 0,2 bis 3 phr.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage. Wird ein Schwefelspender als Vernetzer (2) eingesetzt, so beträgt die Menge üblicherweise 1 bis 10 phr, bevorzugt 1 bis 6 phr und besonders bevorzugt 1 bis 4 phr.

Es kann sinnvoll sein, bei der Herstellung des Composites noch ein oder mehrere **Füllstoffe** einzusetzen: Hierzu kommen beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Carbonanotubes, Teflon (letzteres bevorzugt in Pulverform) oder Silikate in Frage.

Der Füllstoff kann in einer Menge von 1 bis 600 phr, bevorzugt 10-500 phr, besonders bevorzugt 20 - 400 phr, und insbesondere 50-300 phr eingesetzt werden.

Es ist möglich, zusätzlich zum Vernetzer noch ein oder mehrere Vernetzungsbeschleuniger zu verwenden, mit deren Hilfe die Vernetzungsausbeute erhöht werden kann. Grundsätzlich kann die Vernetzung aber auch mit einem oder mehreren Vernetzern alleine erfolgen. Sofern ein oder mehrere Vernetzungsbeschleuniger eingesetzt werden, so liegt die Menge üblicherweise bei bis zu 15 phr, bevorzugt 0,05 - 13 phr, besonders bevorzugt 1 - 12 phr und insbesondere 1 - 10 phr eingesetzt.

Sofern Vernetzungsbeschleuniger in Mischungen mit z.B. Paraffinen o.a. Substanzen eingesetzt werden, bezieht sich die o.g. phr-Angabe auf die jeweilige Wirksubstanz.

Als derartige Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können z.B. Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethylithiocarbamat und Zinkdiisononyldithiocarbamat eingesetzt werden.

Als Thiurame können z.B. Tetramethylthiuramdisulfid (TMTD), Tetramethylthiurammonosulfid (TMTM), Dimethyldiphenylthiuramdisulfid, Tetrabenzylthiuram-disulfid, Dipentamethylenthiuramtetrasulfid und Tetraethylthiuramdisulfid (TETD) eingesetzt werden.

Als Thiazole können z.B. 2-Mercaptobenzothiazol (MBT), Dibenzthiazyldisulfid (MBTS), Zinkmercaptobenzothiazol (ZMBT) und Kupfer-2-mercaptobenzo-thiazol eingesetzt werden.

Als Sulfenamidderivate können z.B. N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid oder Oxydiethylenthiocarbamyl-N-oxyethylensulfenamid eingesetzt werden.

Als Xanthogenate können z.B. Natriumdibutylxanthogenat, Zinkisopropyldibutylxanthogenat oder Zinkdibutylxanthogenat eingesetzt werden.

Als Guanidinderivate können z.B. Diphenylguanidin (DPG), Di-o-tolylguanidin (DOTG) oder o-Tolylbiguanid (OTBG) eingesetzt werden.

Als Dithiophosphate können z.B. Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) oder Dithiophoshorylpolysulfid eingesetzt werden.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Vernetzungsbeschleuniger können sowohl einzeln als auch in Mischungen eingesetzt werden. Bevorzugt werden folgende Substanzen für die Vernetzung der Nitrilkautschuke eingesetzt: 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithiobiscaprolactam.

Bei einer Schwefelvernetzung ist es gegebenenfalls auch sinnvoll, zusätzlich zu den Vernetzern und den zuvor genannten Vernetzungsbeschleunigern als Komponente (4) auch weitere anorganische bzw. organische Substanzen mit zu verwenden, beispielsweise: Zinkoxid, Zinkcarbonat, Bleioxid, Magnesiumoxid, gesättigte oder ungesättigte organische Fettsäuren wie Stearinsäure und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Es ist möglich, bei der Herstellung der erfindungsgemäßen Composites auch **Füllstoffaktivatoren** einzusetzen. Hierfür kommen bevorzugt organische Silane, besonders bevorzugt Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar.

Sofern Füllstoffaktivatoren eingesetzt werden, beträgt deren Menge üblicherweise bis zu 10 phr, bevorzugt 0,01 - 10 phr, besonders bevorzugt 0,25 - 10 phr und insbesondere 0,5 bis 7 phr.

Es ist ferner möglich, bei der Herstellung der erfindungsgemäßen Composites ein oder mehrere **Alterungs-**

**schutzmittel** einzusetzen. Hierbei können alle diejenigen zugesetzt werden, die bereits im Zusammenhang mit der Latexkoagulation in dieser Anmeldung beschrieben werden. Sie werden üblicherweise in Mengen von bis zu 5 phr, bevorzugt 0,2 - 5 phr, besonders bevorzugt 0,25 - 4 phr und insbesondere 0,5- 3 phr eingesetzt.

Es ist möglich, bei der Herstellung der erfindungsgemäßen Composites auch **Ozonschutzmittel** einzusetzen, bevorzugt paraffinische Wachse, Mikrowachse, Nickeldibutyldithiocarbamat, Phenylendiamine, Vulkazon AFS/LG (CAS Nr. 006600-31-3) oder Vulkazon AFD (CAS-Nr. 022428-48-4) eingesetzt werden. Sofern sie eingesetzt werden, betragen die Mengen üblicherweise bis zu 5 phr, bevorzugt 0,2 - 5 phr, besonders bevorzugt 0,25 - 4 phr und insbesondere 0,5- 3 phr.

Es ist darüber hinaus auch möglich, bei der Herstellung der erfindungsgemäßen Composites ein oder mehrere Weichmacher einzusetzen, bevorzugt z.B. die folgenden: Phthalsäureester wie DOP oder DINP, Adipate wie DOA, Mellitate oder Trimellitate wie TOTM, Sebacate wie DOS, Diesterether-Gemische wie Rhenosin® W759, Thioether wie Vulkanol® OT, Phosphate wie Disflamoll®, Mesamoll® oder polymere Weichmacher wie Ultramoll® und biobasierte Weichmacher wie ESBO.

Der/Die Weichmacher wird üblicherweise in einer Menge von bis zu 180 phr, bevorzugt von 0,5 bis 150 phr, besonders bevorzugt von 1 bis 125 phr und insbesondere 1 bis 100 phr eingesetzt.

**Gegenstand der Erfindung** ist ferner die Verwendung der Composites zur Herstellung von Bauteilen, bevorzugt für die Anwendung im Automobilinnenraum und die Bauteile auf Basis dieser Composites.

**BEISPIELE:**

**I. Analytik**

**Acrylnitrilgehalt:**

Der Stickstoffgehalt zur Bestimmung des Acrylnitrilgehalts wurde in den erfindungsgemäßen Nitrilkautschuken gemäß DIN 53 625 nach Kjeldahl bestimmt.

**Mooney-Bestimmung:**

Die Bestimmung der Mooney-Viskosität (ML 1+4 @ 100°C) erfolgte gemäß ASTM D 1646 bei 100°C.

**Partikelgrößenbestimmung:**

Die **Partikelgröße** der pulverförmigen Mischung wurde granulometrisch bestimmt. Dazu wurden 100 g der pulverförmigen Mischung in einem Sieb der Maschengröße 2,0 mm eingewogen. Unterhalb dieses Siebes wurden weitere Siebe mit der Maschengröße 1,4 mm, 1,0 mm, 0,8 mm, 0,6 mm und 0,3 mm platziert. Die zusammengesetzten Siebe werden auf einer Vibrationssiebmaschine (AS 200 control ,g' , Fa. Retsch) eingespannt und mit einer Amplitude von 2,00 mm für einen Zeitraum von 30 min behandelt. Danach wurden die einzelnen Siebe ausgewogen und die durchschnittliche Partikelgröße $D_a$ berechnet gemäß der folgenden Formel:

$$D_a = \Sigma(X_i D_i)/100$$

worin

$D_a$ den mittlerer Partikeldurchmesser in mm bedeutet,
$X_i$ den %-Anteil der im jeweiligen Sieb zurückgehaltenen Partikelgesamtmasse in g darstellt

und

$D_i$ die mittlere Maschenweite des jeweiligen Siebes n und n+1 in mm bedeutet.

Weiterhin gilt

$$D_i = (D_n + D_{(n+1)})/2$$

worin

$D_n$      der Maschendurchmesser des Siebes n in mm ist und

$D_{(n+1)}$      den Maschendurchmesser des Siebes n+1 in mm bedeutet.

Die **flüchtigen organischen Bestandteile** der Nitrilkautschuke wurden gemäß **VDA 278** (Version 2011) mittels einer Thermodesorptions-Gaschromatographie (TDS-GC/MS) quantifiziert.

## II. Herstellung von NBR-Polymeren A und B

Als Basis zur Herstellung der erfindungsgemäßen Beispiele und der Vergleichsbeispiele wurden zwei NBR-Polymere A und B, wie in **Tabelle 1** angegeben, hergestellt und verwendet.

**Tabelle 1: Herstellung der NBR Polymere A und B**

| (Mengenangaben jeweils in Gewichtsteilen bezogen auf 100 Teile Gesamtmonomer (Butadien und Acrylnitril)) | | |
|---|---|---|
| **Nitrilkautschuk** | **A** | **B** |
| | | **Vergleich** |
| Butadien (Gesamt) | 64.15 | 64.15 |
| Acrylnitril (Gesamt/Inkrement)[1] | 35.85/9 | 35.85/9 |
| | | |
| | **phr** | **phr** |
| Gesamt-Wassermenge | 200 | 200 |
| Ölsäure[2] | 1.5 | 1.5 |
| Harzsäure[3] | 0.6 | 0.6 |
| AOS[4] | 0.4 | 0.4 |
| Sulfole 120 / t-DDM[5] (Gesamt/Inkrement) | --- | 0.31/0.13 |
| Sulfole 90[6] (Gesamt/Inkrement) | 0.31/0.13 | --- |
| Trigonox NT 50[7] | 0,031 | 0,031 |
| Prämix $FeSO_4$[8] | 0.027 | 0.027 |
| Diethylhydroxylamin | 0.14 | 0.14 |
| Vulkanox® BKF[9] | 0.3 | 0.3 |
| | | |
| pH[10] | 11,0±1,0 | 11,0±1,0 |
| Polymerisationstemperatur [°C] | 10,0±0,5 | 10,0±0,5 |
| Polymerisationsumsatz [%] | 78 | 78 |
| 1) Die Zugabe des Inkrementes erfolgte bei einem Monomerumsatz von 36% 2) Ölsäure: CAS Nummer 67701-06-8 3) Harzsäure: CAS Nummer 61790-51-0 4) AOS: Natrium $\alpha$ Olefin sulfonat 5) Sulfole 120: t-DDM (tertiäres Dodecylmercaptan); Chevron Philipps Chemicals 6) Sulfole 90: (tertiäres Nonylmercaptan); Chevron Philipps Chemicals 7) p-Menthanhydroperoxid (Trigonox NT 50 der Firma Akzo-Degussa) 8) enthaltend das Reduktionsmittel Rongalit C (Natriumsalz eines Sulfinsäurederivates) sowie das Fe(II) Salz in den oben angegebenen Mengen. 9) 2-[(2-Hydroxy-5-methyl-3-tert-butyl-phenyl)methyl]-4-methyl-6-tert-butyl-phenol; Lanxess Deutschland GmbH 10) gemessen zu Beginn der Polymerisation | | |

Die Herstellung der Nitrilkautschuke A und B erfolgte kontinuierlich in einer Rührkesselkaskade. Nach Einführung der Monomere, der Seife AOS und des Molekulargewichtsreglers (gemäß der in Tabelle 1 angegebenen Mengen bezogen auf 100 Teile Gesamtmonomer) wurde die Reaktion nach Temperierung des Reaktorinhalts durch Zugabe wässriger Lösungen von Eisen(II)salzen (in Form der Prämix-Lösungen) und von para-Menthanhydroperoxid (Trigonox® NT50) gestartet. Die Reaktionsmischung wurde durch die Rührkesselkaskade gepumpt und bei Erreichen des gewünschten Umsatzes durch Zugabe einer wässrigen Lösung von Diethylhydroxylamin im letzten Reaktor abgestoppt. Nicht umgesetzte Monomere und sonstige flüchtige Bestandteile wurden durch Strippen unter Vakuum entfernt.

Vor der Koagulation wurde der NBR-Latex jeweils mit einer 50%igen Dispersion von Vulkanox® BKF (0,3 Massen-% Vulkanox® BKF bezogen auf NBR-Feststoff) versetzt. Anschließend wurde koaguliert, gewaschen und die erhaltenen Krümel getrocknet.

**III. Herstellung pulverförmiger Mischungen aus NBR A bzw. B und einem Trennmittel (Beispiele 1 und 2)**

Die pulverförmigen Mischungen aus NBR und einem Trennmittel wurden basierend auf den NBR Polymeren A und B wie Folgt hergestellt. Die angegebene Menge NBR-Krümel (in g) wurde mit der jeweils angegebenen Menge an Trennmittel Calciumcarbonat (in g) inniglich vermischt. Diese Mischung wurde sukzessive in eine Ultrazentrifugalmühle ZM 200 (Retsch®) gegeben, an die Zyklon angeschlossen war. Die Mühle war mit einem Ringsieb der mittleren Maschengrösse 1 mm ausgestattet und wurde mit einer Geschwindigkeit von 18000 rpm betrieben. Das Pulver wurde im Verlauf des Mahlvorgangs kontinuierlich mittels des Zyklons aus der Mahlkammer entfernt und aufgefangen.

**Tabelle 2: Herstellung der pulverförmigen Mischungen (Beispiele 1 und 2)**

| Pulverförmige Mischung | 1 | 2 (Vergleich) |
|---|---|---|
| | (g) | (g) |
| NBR A | 90 | |
| NBR B | | 90 |
| Calciumcarbonat | 10 | 10 |

**IV. Herstellung pulverförmiger Mischungen aus NBR, einem Trennmittel und einem Thermoplasten (Beispiele 3 und 4 ("dry blend"))**

Die sogenannten dry blends wurden durch Mischen der in Tabelle 3 angegebenen Mengen (in g) in einem Planetenmischer hergestellt. Der Mischer wurde auf 100 °C temperiert. Das pulverförmige PVC wurde zusammen mit dem Stabilisator Mark CZ 97** in das Mischaggregat gegeben, nach 5 Minuten Mischzeit wurden die NBR-Pulvermischungen hinzugefügt. Nach weiteren 10 Minuten Mischzeit entnimmt man den dry blend dem Mischaggregat und lässt das Material vor der weiteren Verarbeitung auf Raumtemperatur abkühlen.

**Tabelle 3: Herstellung von Mischungen aus NBR, einem Trennmittel und einem Thermoplasten (Beispiele 3 und 4)**

| Mischungen | 3 | 4 (Vergleich) |
|---|---|---|
| | (g) | (g) |
| Pulverförmige Mischung aus Beispiel 1 | 100 | |
| Pulverförmige Mischung aus Beispiel 2 | | 100 |
| Vinnolit S 4170* | 300 | 300 |
| Mark® CZ 97** | 9 | 9 |
| * Polyvinylchlorid, pulverförmig, der Vinnolit GmbH & Co. KG | | |
| ** Calcium / Zink Stabilisator von Galata Chemicals | | |

**V. Extrudierte Mischungen aus NBR, einem Trennmittel und einem Thermoplasten ("Composite") (Beispiele 5 und 6)**

Die Heerstellung der Composite erfolgte mittels eines Laborextruders "Plasti-Corder Lab Station" der Firma Brabender®. Der Einschneckenextruder verfügte über vier verschiedene Heizzonen. Die Temperaturen der einzelnen Zonen wurden beginnend von der Probenzuführung auf 155°C, 160°C, 165°C und 170 °C eingestellt. Die Schnecke wurde mit einer Geschwindigkeit von 100 rpm betrieben. Als Werkzeug diente eine schlitzförmige Düse mit einer Breite von 2,5 mm. Die pulverförmigen Beispiele 3 und 4 ("dry blends") wurden dem Extruder zugeführt. Nach ca. 30 s Zuführung wurde ein homogenes Extrudat erhalten ("Composit").

## VI. Zusammenfassung der Analytik für alle Beispiele

In der nachfolgenden **Tabelle 4** sind die analytischen Ergebnisse der Ausgangs-NBR A und B Proben sowie der pulverförmigen Mischung mit dem Trennmittel, der Mischung mit PVC als Thermoplasten und der entsprechenden Composites aufgeführt.

Es ist klar zu erkennen, dass das erfindungsgemäße Beispiel basierend auf einem NBR mit einem Emissionskoeffizienten von 0,041 mg/(kg*Mooney Einheiten), der somit unter 0,25 mg/(kg*Mooney Einheiten) liegt, entsprechend auch zu Compositen führt, die niedrig Emissionsmaterialien darstellen, und somit für kritische Innenraumanwendungen ohne Probleme und Einschränkungen verwendet werden können.

**Tabelle 4: Analytik der Nitrilkautschuke A und B sowie der Beispiele 1-6 ("n.d." steht für nicht bestimmt)**

| Nitrilkautschuk/Pulverförmige Mischung/Mischung/Composite | A | B Vergleich | 1 | 2 Vergleich | 3 | 4 Vergleich | 5 | 6 Vergleich |
|---|---|---|---|---|---|---|---|---|
| ACN-Gehalt (%) | 32.3 | 33.7 | n.d. | n.d. | n.d. | n.d. | n.d. | n.d. |
| Mooney Viskosität (ML1+4@100°C) (MU) | 55 | 48 | n.d. | n.d. | n.d. | n.d. | n.d. | n.d. |
| Durchschnittliche Partikelgrösse $D_a$ (mm) | n.d. | n.d. | **0.62** | **0.62** | n.d. | n.d. | n.d. | n.d. |
| total VOC (mg/kg)[1] | 88 | 129 | 57 | 109 | 45 | 43 | 15 | 12 |
| Emissionskoeffizient [2] E (mg/kg) | **0.041** | **0.412** | 0.039 | 0.333 | 0.015 | 0.066 | 0.003 | 0.012 |

[1] Total VOC wurde nach VDA 278 bestimmt.

[2]

$$E = \frac{[\text{flüchtige Bestandteile}]}{[\text{Mooney Viskosität}]} \times \frac{[\text{Nitrilgehalt}]}{100} \qquad (I)$$

worin

[flüchtige Bestandteile]     die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden,

[Mooney-Viskosität]     die nach ASTM D 1646 bestimmte Mooney-Viskosität ML 1+4 bei 100°C des Nitrilkautschuks, angegeben in Mooney-Einheiten, darstellt, und

[Nitrilgehalt]     den Gehalt des $\alpha,\beta$-ungesättigten Nitrils im Nitrilkautschuk in Gew.%, bestimmt gemäß DIN 53 625 nach Kjeldahl, darstellt.

**Patentansprüche**

1. **Pulverförmige Mischung** enthaltend

    (1) einen **Nitrilkautschuk,** der Wiederholungseinheiten mindestens eines α,β-ungesättigten Nitril-Monomeren und mindestens eines konjugierten Dien-Monomeren aufweist und einen **Emissionsquotienten E** gemäß der Formel (I) von kleiner oder gleich 0,25 mg/(kg*Mooney Einheiten) besitzt,

$$E = \frac{[\text{flüchtige Bestandteile}]}{[\text{Mooney Viskosität}]} \times \frac{[\text{Nitrilgehalt}]}{100} \qquad (I)$$

    worin

    [flüchtige Bestandteile] die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden,
    [Mooney-Viskosität] die nach ASTM D 1646 bestimmte Mooney-Viskosität ML 1+4 bei 100°C des Nitrilkautschuks angegeben in Mooney-Einheiten darstellt, und
    [Nitrilgehalt] den dimensionslos angegebenen Gehalt des α,β-ungesättigten Nitrils im Nitrilkautschuk darstellt, der in Gew.% gemäß DIN 53 625 nach Kjeldahl bestimmt wird,

    und
    (2) ein oder mehrere **Trennmittel,**

    **dadurch gekennzeichnet, dass** die pulverförmigen Mischung einen mittleren Partikeldurchmesser $D_a$ im Bereich von 0,01 bis 4 mm aufweist.

2. **Pulverförmige Mischung** nach Anspruch 1, **dadurch gekennzeichnet, dass** die pulverförmige Mischung einen mittleren Partikeldurchmesser $D_a$ im Bereich von 0,05 bis 3 mm aufweist.

3. **Pulverförmige Mischung** nach Anspruch 1, **dadurch gekennzeichnet, dass** die pulverförmige Mischung einen mittleren Partikeldurchmesser $D_a$ im Bereich von 0,01 bis 2 mm aufweist.

4. **Pulverförmige Mischung** nach einem der Ansprüche 1 bis 3, **dadurch gekennzeichnet, dass** der in der pulverförmigen Mischung enthaltene Nitrilkautschuk (1) einen Emissionsquotienten E gemäß der allgemeinen Formel (I) von kleiner oder gleich 0,22 mg/(kg*Mooney Einheiten) besitzt.

5. **Pulverförmige Mischung** nach einem oder mehreren der Ansprüche 1 bis 4, **dadurch gekennzeichnet, dass** die Nitrilkautschuk Komponente (1) entweder Wiederholungseinheiten von Acrylnitril und 1,3-Butadien enthält oder Wiederholungseinheiten von Acrylnitril, 1,3-Butadien und einem oder mehreren weiteren copolymerisierbaren Monomeren enthält.

6. **Pulverförmige Mischung** nach einem oder mehreren der Ansprüche 1 bis 5, **dadurch gekennzeichnet, dass** das oder die Trennmittel ausgewählt sind aus der Gruppe bestehend aus Kieselsäuren, Calciumcarbonat, Magnesiumcarbonat, Silikaten, Fettsäuresalzen, Calciumphosphat, Aluminiumoxid, Bariumsulfat, Zinkoxid, Titandioxid, Polymeren mit hoher Glastemperatur von mehr als 60 °C, hydrophilen Polymeren, Fluorkohlenwasserstoffpolymeren, Carbo-nanotubes und Mischungen der genannten Trennmittel.

7. **Pulverförmige Mischung** nach einem oder mehreren der Ansprüche 1 bis 5, **dadurch gekennzeichnet, dass** das oder die Trennmittel ausgewählt sind aus der Gruppe bestehend aus Kieselsäure, Calciumcarbonat, Silikat, PVC und Fettsäuresalze.

8. **Pulverförmige Mischung** nach einem oder mehreren der Ansprüche 1 bis 7, **dadurch gekennzeichnet, dass** das eine oder die mehreren Trennmittel in der pulverförmigen Mischung in Summe in einer Menge im Bereich von 0,25 bis 45 Gew.% bezogen auf die gesamte pulverförmige Mischung enthalten sind.

9. **Verfahren zur Herstellung einer pulverförmigen Mischung** nach einem oder mehreren der Ansprüche 1 bis 8, **dadurch gekennzeichnet, dass** man die Nitrilkautschuk-Komponente (1) mit dem ein oder mehreren Trennmitteln (2) in Kontakt bringt.

10. **Verfahren zur Herstellung einer pulverförmigen Mischung** nach Anspruch 9, **dadurch gekennzeichnet, dass** die Herstellung der Nitrilkautschuk-Komponente (1) entweder einen Mahlschritt oder aber einen Sprühtrocknungsschritt umfasst, im Rahmen deren jeweils das Inkontaktbringen mit dem/den Trennmitteln erfolgt.

11. **Composite** enthaltend

   (A) mindestens eine erfindungsgemäße pulverförmige Mischung nach einem oder mehreren der Ansprüche 1 bis 8 und
   (B) ein oder mehrere thermoplastische Polymere.

12. **Composite** nach Anspruch 11, **dadurch gekennzeichnet, dass** die Komponente (B) ausgewählt ist aus der Gruppe bestehend aus Polyvinylchlorid, Polyurethanen, Polyamiden, Epoxidharzen, Phenolharzen, Polypropylen, Polyethylen, Polyethylenvinylacetat und Polystyrol.

13. **Composite** nach Anspruch 12, **dadurch gekennzeichnet, dass** die Komponente (B) ausgewählt ist aus der Gruppe bestehend aus Polyvinylchlorid, Polyurethanen und Polyamiden.

14. **Composite** nach einem oder mehreren der Ansprüche 11-13, **dadurch gekennzeichnet, dass** die Komponenten (A) und (B) in einem Gewichtsverhältnis von (1-99): (99-1), bevorzugt (10-60): (90-40), bezogen auf die Summe der Komponenten (A) und (B) eingesetzt werden.

15. **Verfahren zur Herstellung der Composites** nach einem oder mehreren der Ansprüche 11 bis 14, indem man die beiden Komponenten (A) und (B) miteinander mischt.

16. **Verwendung der Composites nach einem oder mehreren der Ansprüche 11 bis 14** Herstellung von Bauteilen, bevorzugt für die Anwendung im Automobilinnenraum.

17. **Bauteile auf Basis von Composites** nach einem oder mehreren der Ansprüche 11 bis 14

**Claims**

1. **Pulverulent mixture** containing

   (1) one **nitrile rubber** which has repeating units of at least one $\alpha,\beta$-unsaturated nitrile monomer and at least one conjugated diene monomer and has an **emission ratio E** according to the formula (I) of less than or equal to 0.25 mg/(kg*Mooney units),

$$E = \frac{[\text{volatile constituents}]}{[\text{Mooney viscosity}]} \times \frac{[\text{Nitrile content}]}{100} \qquad (I)$$

   where

   [volatile constituents] is the concentration of volatile constituents in mg/kg of nitrile rubber determined by means of a TDS-GC/MS examination in accordance with the VDA 278 recommendation (09.2002 version) in the range from 28.4 minutes to 34.0 minutes,
   [Mooney viscosity] is the Mooney viscosity ML 1 + 4 at 100°C of the nitrile rubber determined in accordance with ASTM D 1646 and reported in Mooney units, and
   [nitrile content] is the dimensionless content of the $\alpha,\beta$-unsaturated nitrile in the nitrile rubber, determined in % by weight by the Kjeldahl method in accordance with DIN 53 625,

   and

(2) one or more **release agents,**

**characterized in that** the pulverulent mixture has an average particle diameter $D_a$ in the range from 0.01 to 4 mm.

2. **Pulverulent mixture** according to Claim 1, **characterized in that** the pulverulent mixture has an average particle diameter $D_a$ in the range from 0.05 to 3 mm.

3. **Pulverulent mixture** according to Claim 1, **characterized in that** the pulverulent mixture has an average particle diameter $D_a$ in the range from 0.01 to 2 mm.

4. **Pulverulent mixture** according to any of Claims 1 to 3, **characterized in that** the nitrile rubber (1) present in the pulverulent mixture has an emission ratio E according to the general formula (I) of less than or equal to 0.22 mg/(kg*Mooney units).

5. **Pulverulent mixture** according to one or more of Claims 1 to 4, **characterized in that** the nitrile rubber component (1) contains either repeating units of acrylonitrile and 1,3-butadiene or repeating units of acrylonitrile, 1,3-butadiene and one or more further copolymerizable monomers.

6. **Pulverulent mixture** according to one or more of Claims 1 to 5, **characterized in that** the release agent(s) is/are selected from the group consisting of silicas, calcium carbonate, magnesium carbonate, silicates, fatty acid salts, calcium phosphate, aluminium oxide, barium sulphate, zinc oxide, titanium dioxide, polymers having a high glass transition temperature of more than 60°C, hydrophilic polymers, fluorinated hydrocarbon polymers, carbon nanotubes and mixtures of the release agents mentioned.

7. **Pulverulent mixture** according to one or more of Claims 1 to 5, **characterized in that** the release agent(s) is/are selected from the group consisting of silica, calcium carbonate, silicate, PVC and fatty acid salts.

8. **Pulverulent mixture** according to one or more of Claims 1 to 7, **characterized in that** the one or more release agent(s) is/are present in the pulverulent mixture in a total amount in the range from 0.25 to 45% by weight based on the total pulverulent mixture.

9. **Process for producing a pulverulent mixture** according to one or more of Claims 1 to 8, **characterized in that** the nitrile rubber component (1) is brought into contact with the one or more release agents (2).

10. **Process for producing a pulverulent mixture** according to Claim 9, **characterized in that** the production of the nitrile rubber component (1) comprises either a milling step or else a spray drying step, during the course of which contacting with the release agent(s) occurs in each case.

11. **Composites** containing

(A) at least one pulverulent mixture according to the invention according to one or more of Claims 1 to 8 and
(B) one or more thermoplastic polymers.

12. **Composites** according to Claim 11, **characterized in that** the component (B) is selected from the group consisting of polyvinyl chloride, polyurethanes, polyamides, epoxy resins, phenolic resins, polypropylene, polyethylene, polyethylene-vinyl acetate and polystyrene.

13. **Composites** according to Claim 12, **characterized in that** the component (B) is selected from the group consisting of polyvinyl chloride, polyurethanes and polyamides.

14. **Composites** according to one or more of Claims 11-13, **characterized in that** the components (A) and (B) are used in a weight ratio of (1-99): (99-1), preferably (10-60): (90-40), based on the sum of the components (A) and (B).

15. **Process for producing the composites** according to one or more of Claims 11 to 14 by mixing the two components (A) and (B) with one another.

16. **Use of the composites according to one or more of Claims 11 to 14** for producing components, preferably for use in automobile interiors.

**17. Components based on composites** according to one or more of Claims 11 to 14.


**Revendications**

**1.** Mélange pulvérulent, contenant

(1) un caoutchouc de nitrile qui présente des motifs récurrents d'au moins un monomère de nitrile α,β-insaturé et d'au moins un monomère diénique conjugué et qui possède un quotient d'émission E selon la formule (I) inférieur ou égal à 0,25 mg/(kg * unités Mooney),

$$E = \frac{[Constituants\ volatils]}{[Viscosité\ de\ Mooney]} \times \frac{[Teneur\ en\ nitrile]}{100} \qquad (\text{I})$$

dans laquelle

[Constituants volatils] représente la concentration en constituants volatils en mg/kg de caoutchouc de nitrile, qui sont déterminés par une analyse TDS-GC/MS (spectroscopie de désorption thermique-chromatographie en phase gazeuse/spectrométrie de masse) selon la recommandation VDA 278 (Version 09.2002) entre 28,4 min et 34,0 min,
[Viscosité de Mooney] représente la viscosité de Mooney déterminée selon la norme ASTM D 1646 ML 1+4 à 100°C du caoutchouc de nitrile, indiquée en unités de Mooney et
[Teneur en nitrile] représente la teneur indiquée sans dimension en nitrile α, β-insaturé, qui est déterminée en % en poids selon la norme DIN 53 625 selon Kjeldahl,

et
(2) un ou plusieurs agents de démoulage,

**caractérisé en ce que** le mélange pulvérulent présente un diamètre moyen de particule $D_a$ dans la plage de 0,01 à 4 mm.

**2.** Mélange pulvérulent selon la revendication 1, **caractérisé en ce que** le mélange pulvérulent présente un diamètre moyen de particule $D_a$ dans la plage de 0,05 à 3 mm.

**3.** Mélange pulvérulent selon la revendication 1, **caractérisé en ce que** le mélange pulvérulent présente un diamètre moyen de particule $D_a$ dans la plage de 0,01 à 2 mm.

**4.** Mélange pulvérulent selon l'une quelconque des revendications 1 à 3, **caractérisé en ce que** le caoutchouc de nitrile (1) contenu dans le mélange pulvérulent possède un quotient d'émission E selon la formule générale (I) inférieur ou égal à 0,22 mg/(kg * unités Mooney).

**5.** Mélange pulvérulent selon l'une ou plusieurs des revendications 1 à 4, **caractérisé en ce que** le caoutchouc de nitrile du composant (1) contient soit des motifs récurrents d'acrylonitrile et de 1,3-butadiène, soit des motifs récurrents d'acrylonitrile, de 1,3-butadiène et d'un ou de plusieurs autres monomères copolymérisables.

**6.** Mélange pulvérulent selon l'une ou plusieurs des revendications 1 à 5, **caractérisé en ce que** le ou les agents de démoulage sont choisis dans le groupe constitué par les silices, le carbonate de calcium, le carbonate de magnésium, les silicates, les sels d'acide gras, le phosphate de calcium, l'oxyde d'aluminium, le sulfate de baryum, l'oxyde de zinc, le dioxyde de titane, les polymères présentant une température de transition vitreuse supérieure à 60°C, les polymères hydrophiles, les polymères fluorohydrocarbonés, les nanotubes de carbone et les mélanges des agents de démoulage mentionnés.

**7.** Mélange pulvérulent selon l'une ou plusieurs des revendications 1 à 5, **caractérisé en ce que** ledit un ou lesdits plusieurs agents de démoulage sont choisis dans le groupe constitué par la silice, le carbonate de calcium, le silicate, le PVC et les sels d'acide gras.

**8.** Mélange pulvérulent selon l'une ou plusieurs des revendications 1 à 7, **caractérisé en ce que** le ou les agents de démoulage sont contenus dans le mélange pulvérulent, au total, en une quantité dans la plage de 0,25 à 45% en poids par rapport au mélange pulvérulent total.

9. Procédé pour la préparation d'un mélange pulvérulent selon l'une ou plusieurs des revendications 1 à 8, **caractérisé en ce qu'**on met en contact le composant de caoutchouc de nitrile (1) avec ledit un ou lesdits plusieurs agents de démoulage (2).

10. Procédé pour la préparation d'un mélange pulvérulent selon la revendication 9, **caractérisé en ce que** la préparation du caoutchouc de nitrile (1) comprend soit une étape de broyage, soit une étape de séchage par pulvérisation dans le cadre de laquelle a lieu à chaque fois la mise en contact avec le/les agents de démoulage.

11. Composite contenant

   (A) au moins un mélange pulvérulent selon l'invention selon l'une ou plusieurs des revendications 1 à 8 et
   (B) un ou plusieurs polymères thermoplastiques.

12. Composite selon la revendication 11, **caractérisé en ce que** le composant (B) est choisi dans le groupe constitué par le poly(chlorure de vinyle), les polyuréthanes, les polyamides, les résines époxyde, les résines phénoliques, le polypropylène, le polyéthylène, le poly(éthylène-acétate de vinyle) et le polystyrène.

13. Composite selon la revendication 12, **caractérisé en ce que** le composant (B) est choisi dans le groupe constitué par le poly(chlorure de vinyle), les polyuréthanes et les polyamides.

14. Composite selon l'une ou plusieurs des revendications 11-13, **caractérisé en ce que** les composants (A) et (B) sont utilisés en un rapport pondéral de (1-99):(99-1), de préférence de (10-60): (90-40), par rapport à la somme des composants (A) et (B).

15. Procédé pour la préparation des composites selon l'une ou plusieurs des revendications 11 à 14 en ce qu'on mélange les deux composants (A) et (B) l'un avec l'autre.

16. Utilisation des composites selon l'une ou plusieurs des revendications 11 à 14 pour la préparation de pièces, de préférence destinées à être utilisées dans l'habitacle de voitures.

17. Pièces à base de composites selon l'une ou plusieurs des revendications 11 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 102757597
- CN 1730544
- CN 102617940
- JP 50023713 B
- US 2434536 A
- EP 06924 A
- EP 0779301 A
- EP 0779300 A
- EP 0692496 A
- DD 154702

**In der Beschreibung aufgeführte Nicht-Patentliteratur**

- Ullmann's Encyclopedia of Industrial Chemistry. VCH Verlagsgesellschaft, 1993, 255-261
- Ullmanns Enzyklopädie der technischen Chemie. vol. 13, 611-612
- *CHEMICAL ABSTRACTS,* 25360-10-5
- Ullmann's Encyclopedia of Industrial Chemistry. vol. 31, 345-355
- Ullmann's Encyclopedia of Industrial Chemistry. vol. 13, 75-108
- **W. HOFMANN.** *Nitrilkautschuk,* 1965, 58-66
- *CHEMICAL ABSTRACTS,* 61788-44-1
- *CHEMICAL ABSTRACTS,* 000128-37-0
- *CHEMICAL ABSTRACTS,* 000119-47-1
- *CHEMICAL ABSTRACTS,* 006600-31-3
- *CHEMICAL ABSTRACTS,* 022428-48-4
- *CHEMICAL ABSTRACTS,* 67701-06-8
- *CHEMICAL ABSTRACTS,* 61790-51-0